# EUROPEAN PATENT APPLICATION

(11) **EP 2 963 524 A1**
(43) Date of publication of application: **06.01.2016**
(21) Application number: 15176885.0
(22) Date of filing: 07.05.2010
(51) Int. Cl.: G06F 3/01

(54) **METHOD AND APPARATUS FOR PROVIDING A HAPTIC FEEDBACK SHAPE-CHANGING DISPLAY**

(30) Priority: 07.05.2009 US 176431 P; 06.08.2009 US 231708 P
(62) Divisional of application: 10723446.0
(71) Applicant: Immersion Corporation, San Jose, CA 95134 (US)
(72) Inventor: GRANT, Danny A., Laval, Québec H7M 2A1 (CA); MODARRES, Ali, San José, CA 95134 (CA); CRUZ-HERNANDEZ, Juan Manuel, Montreal, Québec H3Z 1T1 (CA); JIANG, Li, Stanford, CA California 64305 (US); BIRNBAUM, David M., Oakland, CA California 94607 (US); PIERON, Remy, Portola Valley, CA California 94128 (US); ULLRICH, Christopher J., Ventura, CA California 93003 (US); LACROIX, Robert A., Saint-Lambert, Québec J4R 1K2 (CA)
(74) Representative: Hofstetter, Schurack & Partner

(57) **Abstract**

A haptic device includes a processor, a communication module coupled to the processor for receiving a shape input, and a housing for housing the communication module and including a deformable portion. The deformable portion includes a deformation actuator, and the processor provides a signal to the deformation actuator in response to the shape input to deform the housing. The shape of other areas of the device may also change in response to the signal. The shape changes may provide haptic effects, provide information, provide ergonomic changes, provide additional functionality, etc., to a user of the device.

## Description

### RELATED APPLICATIONS

This application claims priority to U.S. Provisional Patent Application Nos. 61/176,431 filed May 7, 2009, and 61/231,708 filed Aug. 6, 2009, the specification of each is herein incorporated by reference.

### FIELD

Embodiments of the invention are directed to electronic interface devices, and more particularly to shape changing devices.

### BACKGROUND INFORMATION

As portable computing devices such as cell phones and personal digital assistants ("PDAs") become more prevalent in recent years, the ease of use relating to human machine interface has become increasingly important. A conventional portable computing device may include various input/output ("I/O") methods to facilitate human- machine interface such as keypads, touch screens, dedicated buttons, track balls, mouse, and the like. For example, a user presses a region on a touch screen commonly with a fingertip to emulate a button press on a panel in accordance with graphics displayed behind the panel on the display device.

A wide variety of device configuration and/or shapes associated with typical portable computing devices are structured with various physical constraints, particularly with limited I/O options for the human-machine interface. Typical portable computing devices such as cell phones, for example, come in various shapes and designs, wherein each design of the cell phone is usually optimized to achieve an acceptable level of comfort for holding the phone. A drawback associated with a typical portable computing device is that the shape of the outer enclosure of the phone is normally designed for holding with one hand while talking. The shape or structure of a phone with optimized outer enclosure, however, is typically not suitable for various other scenarios such as typing text messages.

Similar drawbacks to those discussed above with regard to portable computing devices may also be associated with various conventional handheld gaming devices. In addition, conventional handheld gaming devices provide various haptic effects but may benefit from a richer range of such haptic effects to provide users with an improved gaming experience.

### SUMMARY

One embodiment is a haptic device that includes a processor, a communication module coupled to the processor for receiving a shape input, and a housing for housing the communication module and including a deformable portion. The deformable portion includes a deformation actuator, and the processor provides a signal to the deformation actuator in response to the shape input to deform the housing. The shape of other areas of the device may also change in response to the signal. The shape changes may provide haptic effects, provide information, provide ergonomic changes, provide additional functionality, etc., to a user of the device.

### BRIEF DESCRIPTION OF THE DRAWINGS

FIG. 1 is a block diagram illustrating a portable device capable of providing kinesthetic effects in accordance with embodiments of the present invention.
FIGS. 2a and 2b are block diagrams illustrating exemplary portable handheld devices in accordance with embodiments of the present invention.
FIG. 3 illustrates an example of a cell phone with a slider bar surface characteristic in accordance with embodiments of the present invention.
FIGS. 4a-4c illustrate examples of shape changing gaming devices in accordance with embodiments of the present invention.
FIG. 5 is a block diagram illustrating a shape changing device emulating a tennis racket gaming console in accordance with embodiments of the present invention.
FIG. 6 is a block diagram illustrating an example of control structure for a shape changing device in accordance with embodiments of the present invention.
FIG. 7 is a flow diagram illustrating a method of controlling a deformable surface for a device in accordance with embodiments of the present invention.
FIG. 8 illustrates a handheld device capable of providing haptic effects in accordance with various embodiments of the present invention.
FIG. 9 illustrates various haptic effects that may be provided via a handheld device in accordance with various embodiments of the present invention.
FIG. 10 illustrates an input and a haptic output that may be used to simulate a force haptic effect in accordance with various embodiments of the present invention.
FIG. 11 illustrates various views of a handheld device capable of providing various haptic effects in accordance with an embodiment of the present invention.
FIG. 12 illustrates various views of a handheld device capable of providing various haptic effects in accordance with an embodiment of the present invention.
FIG. 13 illustrates various views of a handheld device capable of providing various haptic effects in accordance with an embodiment of the present invention.
FIG. 14 is a block diagram of a deformation effect device in accordance with one embodiment of the invention.
FIG. 15 is a perspective view of a game controller in accordance with one embodiment of the invention.
FIG. 16 is a perspective view of a computer mouse in accordance with one embodiment of the present invention.

### DETAILED DESCRIPTION

One embodiment of the present invention is a portable computing system capable of macroscopically altering its physical shape using vibrotactile haptic feedback. The system, in one embodiment, includes an electronic communication component, housing, and a haptic surface. The electronic communication component for instance is capable of receiving a shape input and is configured to be a wireless communication device such as a phone or a gaming apparatus. The housing, also known as an outer enclosure of the system, houses the electronic communication component. The haptic surface which overlays at least a portion of the housing is configured to macroscopically alter its physical shape in response to the shape input.

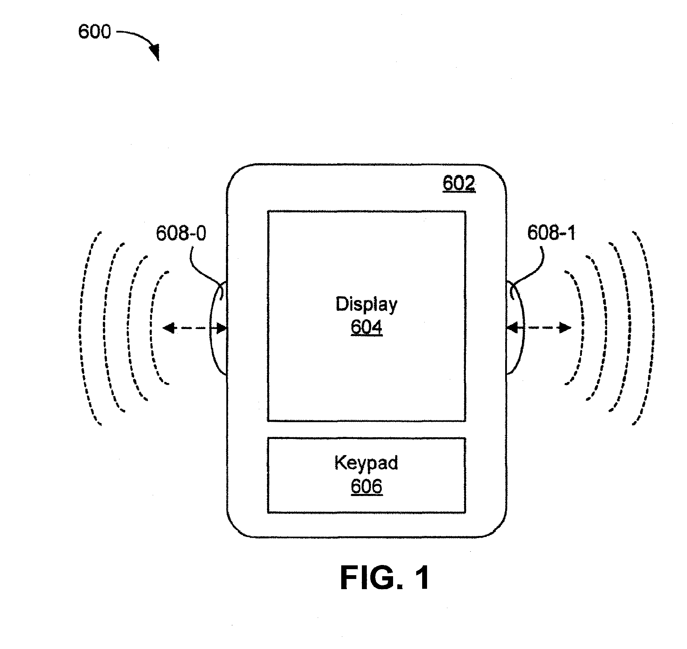

FIG. 1 is a block diagram illustrating a portable device 600 capable of providing kinesthetic effects in accordance with embodiments of the present invention. Device 600 includes a housing 602, a display 604, a keypad 606, and extensions 608-0 and 608-1. In another embodiment, keypad 606 is part of a touchscreen display 604. Device 600, in one embodiment, is a wireless portable system capable of providing wireless audio/video communication, mobile data communication, remote game console, and the like. For example, device 600 may be a cellular phone, a PDA, a smart phone, a laptop computer, a game console, and/or a handheld electronic device capable of processing information as well as providing haptic feedback.

To provide a haptic feedback to a user's hand in accordance with an operation mode, device 600 is capable of macroscopically altering its outer enclosure or housing 602 (which includes extensions 608) in response to the nature of the application. Depending on the application, extensions 608 can expand or contract (as indicated by arrows in Figure 1) thereby macroscopically altering the shape and/or size of housing 602. In one embodiment, a shape is "macroscopically" altered if it changes to the extent that the change can be detected by the user via, for example, sight or feel. For example, a cell phone device capable of changing its outer enclosure shape may be used to emulate a handshake between two users. To convey a handshake, a first user, for instance, might squeeze its first shape changing phone to cause a pulse or squeeze of a second shape changing phone of a second user, where the first and second users are engaged in a telephone call via the first and second shape changing phones connected to the first shape changing phone. In other words, a shape input or shape signal is sent from the first shape changing device to a second shape changing device indicating that the second device should activate its haptic mechanism to change its shape for emulating a handshake. In other embodiments, additional portions of device 600 besides housing 602 may also change shape, such as display 604, or input elements such as keypad 606.

Systems such as device 600 may employ vibrotactile effects and/or kinesthetic effects to emulate shape changing effects. Vibrotactile effects, for instance, may be used to incorporate haptic feedback to a user via a handheld device. Such haptic feedback effects may be characterized by relatively high-frequency (e.g., about 160 - 220 Hz) and relatively small displacement (e.g., about 50 - 500 micrometers) vibrations. Further, different types of haptic information such as confirmation of button clicks and alerts can also be conveyed. Kinesthetic effects, on the other hand, may be characterized by relatively large displacements (e.g., about 1 - 10 mm) and relatively low-frequency (e.g., about 10 - 40 Hz) motions. Deformable or flexible surfaces can be used for effective emulation of kinesthetic effects, such as macroscopically changing surface properties depending on the application or activated feature.

Kinesthetic effects may be effectively emulated using deformable haptic surfaces. For example, kinesthetic effects may allow a handheld device to be used as a directional navigation tool. In this example, activation of deformable surfaces at different locations on the handheld device can be used as a haptic display of directional information. In another example, kinesthetic effects allow performance of specific effects (e.g., pulsation, heartbeat, etc.), which could be of value in virtual tele-presence and/or social networking applications. In one example, a heartbeat of one person can be emulated by expanding and contracting deformable pads on the sides of a cell phone of another person connected via a telephone call. In another example, a squeezing of a cell phone at one end of a call can be emulated as a handshake sensation at another cell phone at the other end of the call.

Force haptic effects or "force effects" may be emulated using various types of input signals to drive a haptic actuator, such as, but not limited to, an eccentric rotating mass ("ERM"). Certain types of input signals may be used to provide various impulse force effects or a "jerk sensation" as opposed to more constant force effects (e.g., pushing or pulling force effects). In one example, such impulse force effects may simulate being poked by a finger. In one example, such impulse force effects may simulate a strike, for example, of a golf club impacting a golf ball. In one example, such impulse force effects may simulate a racket impacting a tennis ball. Impulse force effects may be used to simulate other gaming environments.

Device 600, in one embodiment, is able to change shape based on an operating mode (e.g., application, activated feature, etc.), as opposed to merely being manipulated by a user. Various haptic materials and/or actuators can be used in the haptic mechanism to cause varying shapes in a flexible surface of device 600. For example, electroactive polymers ("EAPs") may be used to form one or more actuators in the haptic mechanism for shape changing based on activation of control signals. In other embodiments, a piezoelectric element, programmable gels, or a fiber of shape memory alloys ("SMAs") can be used as actuators.

In one embodiment, indications of a device operating mode such as an activated feature and application can activate predetermined patterns of a haptic mechanism. Such patterns can then be applied to the flexible surface of device 600 using a deformation mechanism. A haptic substrate that includes a plurality of actuators can be applied to the surface to enact or form the patterns. EAPs, for example, can be employed to form one or more actuators in a haptic mechanism such that activating signals received by the haptic mechanism can convey flexible surface shapes. The haptic substrate can be formed from micro-electro-mechanical systems ("MEMS") elements, thermal fluid pockets, MEMS pumps, resonant devices, variable porosity membranes, laminar flow modulation, etc.

Extensions 608 can be controllable as to displacement, as well as any pulsation or other suitable effects and/or patterns. For example, one user can squeeze a first device, and a second device connected on a call to the first device can pulse or squeeze in the hand of a second user to convey a physical handshake. Thus, a signal can be sent from the first device to the second device to indicate that the second device should change shape to emulate a handshake (e.g., a low frequency force or pressure like a squeeze of a hand). In this fashion, any predetermined shape change characteristics or patterns supportable by the underlying haptic mechanism, substrate, and/or actuator control can be employed.

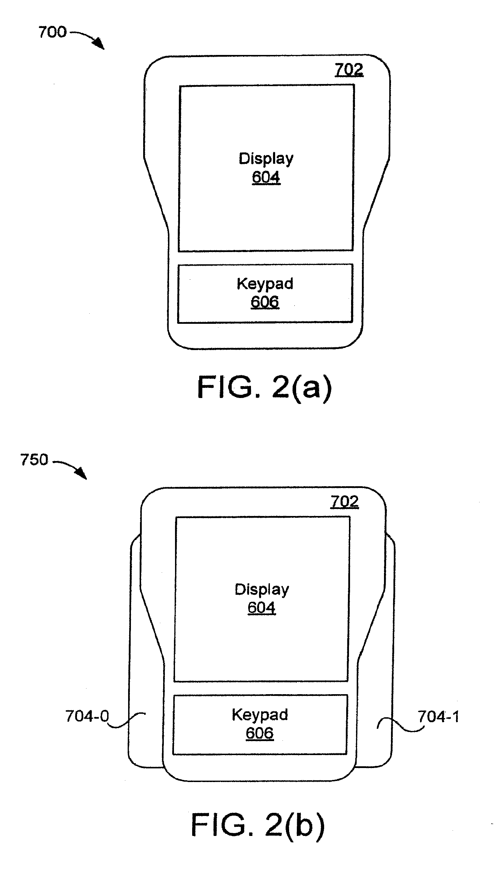

FIGS. 2a-2b are block diagrams illustrating portable handheld devices (700, 750) in accordance with embodiments of the present invention. Device 700 can be used as a directional navigation tool (e.g., using the global positioning system ("GPS")), in which activation of deformable surfaces 704-0 and 704-1 at different locations on the device can be used as a haptic display of directional information. In this case, deformable surface/extension 704-0 may protrude to indicate a leftward direction, while deformable surface 704-1 may protrude to indicate a rightward direction. In another example, such a device can perform specific predetermined effects (e.g., pulsation, heartbeat, etc.), which could be of value in virtual tele-presence and social networking applications. In a heartbeat example, the heartbeat of a user could be emulated by expanding and contracting deformable pads 704-0 and 704-1 on the sides of device 700 or 750 at the other end of a phone connection.

In the case of entering a text message on a cell phone, where normally a device is held with both hands to allow for two thumbs to press the number pad buttons, usable space may be constrained. In such a case, deformable surfaces (e.g., extensions 704) can be activated on the back and/or the sides of the enclosure of the device, such that device gripping can be facilitated. The deformable surfaces or shape can be controlled to provide predetermined pressure patterns along the contact area between hand and device. Therefore, for various gestures of the hands or fingers, a user can perform a relatively smooth writing task, as well as possibly improve text entry speed and accuracy.

Particular embodiments can include shape changing for accommodation of individual ergonomics. For example, a cell phone can automatically adjust from a relatively thin shape for call dialing to a thicker shape for sending text messaging or other keypad intensive activity, or can change shape depending on if the user is holding the phone with one hand or with both hands. In particular embodiments, such a device can detect or otherwise receive information regarding a particular mode or activation of an application (e.g., call application, texting application, etc.), and then make shape adjustments accordingly. Further, a user may program preferences (e.g., an extension of about 1 cm on the right device side during texting applications) for particular applications. In the example of FIG. 2, particular embodiments can include controlled activation of extra retractable pieces, swelling material (e.g., EAP), or the like, to accomplish the wider shapes as illustrated.

The shape of an outer enclosure of a cell phone is normally designed for holding with one hand while talking. An advantage of using a shape changing cellular phone is to provide gross motions of deformable surfaces for facilitating alteration of the geometric shape of the device (e.g., via deformable surfaces/extensions 704) for a specific application. Another advantage of using a shape changing device is to adjust the general form of the device to achieve a more comfortable interaction and/or improve ergonomic properties.

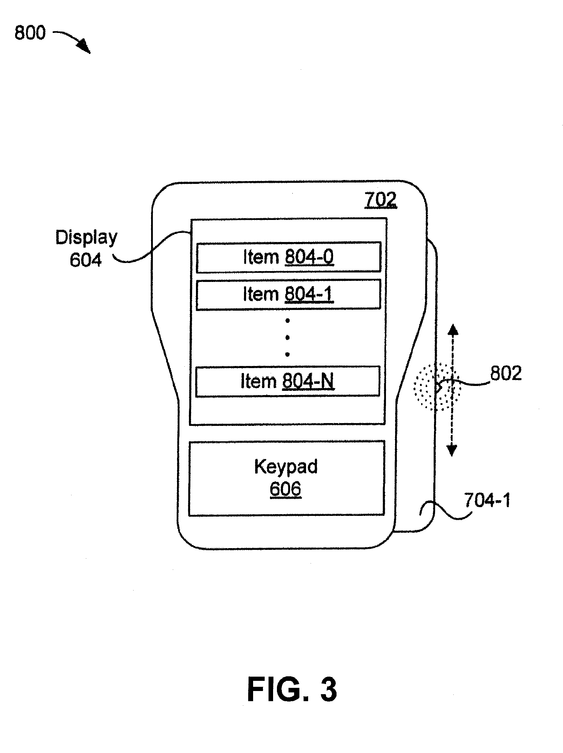

FIG. 3 illustrates an example of a cell phone 800 with a slider bar surface characteristic in accordance with embodiments of the present invention. Any predetermined shapes can be configured to appear on a surface of a device. Such shapes can be controlled by controlling individual actuator elements or sub-arrays of haptic actuators. For example, if a user intends to scroll a long list of contacts (e.g., items 804-0, 804-1, ..., 804-N) on a touchscreen cell phone, a scroll thumb (e.g., 802) with added tactile feedback can be enacted (e.g., by using extension 704-1) to allow for an intuitive input/output interface with the device.

When cell phone 800 is being used in music player mode, a list of songs can be scrolled. A deformable and/or flexible surface can be employed to form a virtual scroll box with a custom shape on one or more sides of phone 800, and scrollbar 802 is configured to move along the scrollbox in response to a user pushing the scrollbar up/down. Moreover, localized haptic vibrotactile feedback can also be incorporated on the flexible surface to convey specific information, such as when the scrollbox is close to the top or bottom of the song list, or when a new group of contact names starts in the list. A portable handheld device such as device 800 having a deformable slider or scrollbox is applicable to various digital information applications such as data search as well as haptic feedback.

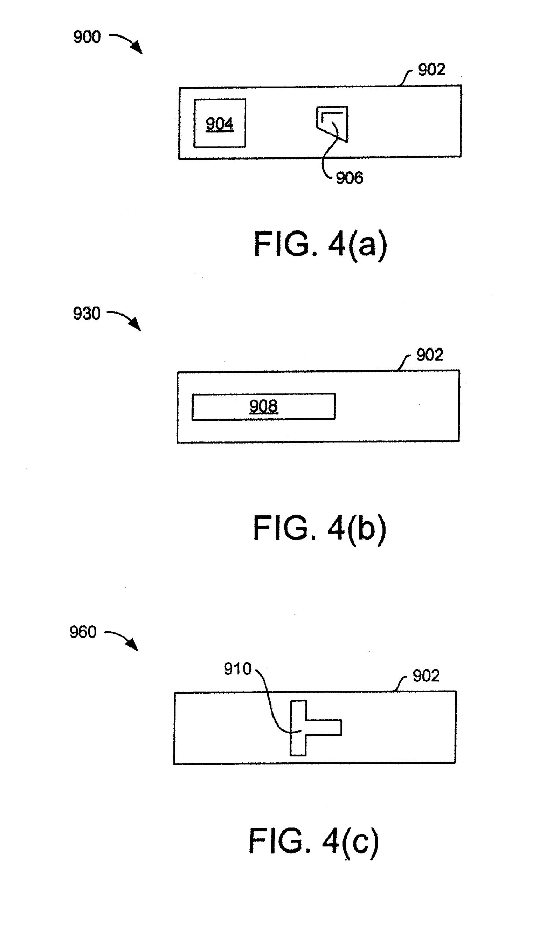

FIGS. 4a-4c are block diagrams illustrating examples of shape changing gaming devices 900, 930, and 960 in accordance with embodiments of the present invention. Changing of shape in such devices 902 allows for communicating various information 904 and haptic effects from the game environment to the user. For example, the gaming device shape can be adjusted to become closer to a geometric form of a tool (e.g., a shape of a weapon 906 as may be used in a game, or other appropriate shape 910, etc.) that is virtually held by a user's hand in the gaming environment.

As shown in FIG. 4a-4c, different types of data (e.g., a button 908 that gets smaller as life in game or time remaining is reduced, status of a player, etc.), associated with various scenarios occurring in a computer game can be displayed by activating deformable surfaces on a side and/or back of computer game controllers. Further, vibrotactile and/or kinesthetic effects can be emulated on gaming device surfaces to incorporate haptic feedback associated with interaction of the virtual player with the objects in the game.

In this fashion, devices in particular embodiments can include a flexible surface that changes macroscopic shapes or characteristics. Such shape changes can be in response to applications or operating states/modes of the device, as opposed to any direct user action. Further, an actuator in the form of a haptic substrate of particular embodiments can support vibrotactile and/or kinesthetic effects. As illustrated, in the devices of FIG. 4, specific shapes are formed on the side of the device to indicate game status or a weapon, for example, as opposed to merely changing the shape of a handle.

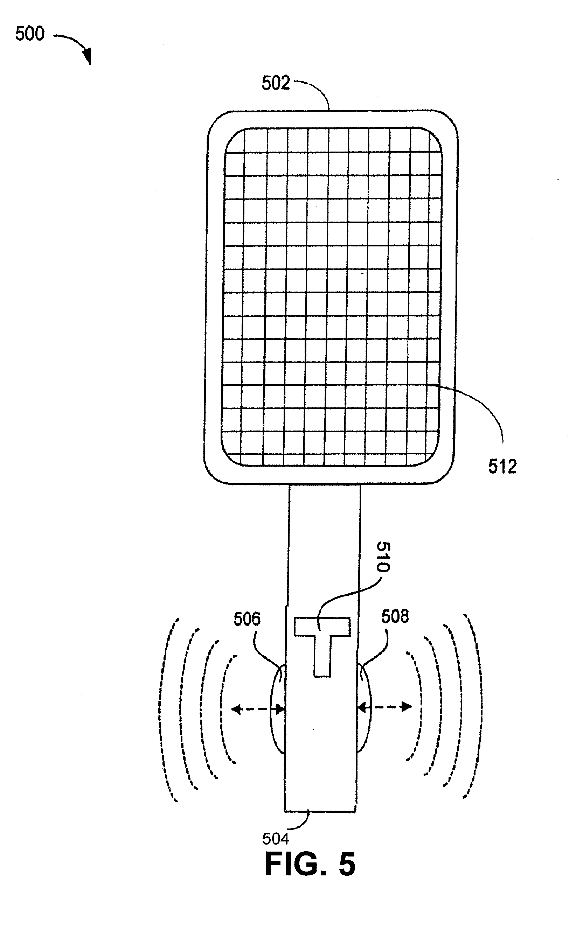

FIG. 5 is a block diagram illustrating a shape changing device 500 emulating a tennis racket gaming console in accordance with embodiments of the present invention. Shape changing device 500 includes a display 502 and a handle 504. In some embodiments handle 504 includes shape changing haptic mechanisms 506, 508. In one embodiment, device 500 is a remote gaming apparatus in which device 500 can be configured to be one of several gaming controllers and/or consoles.

Display 502, in one embodiment, is capable of displaying an image in connection to a game to be played. For example, device 500 is emulating a tennis racket so display 502 displays an image of a frame 512 with a tightly interlaced network of strings. In another embodiment, device 500 may not include display 502, and instead may include actual physical "strings" or other suitable indicia. Handle 504, in one example, also includes shape changing haptic mechanisms 506, 508 that either or both are capable of expanding or contracting physical shape and/or size in one or more directions (illustrated in FIG. 5 as inwardly and outwardly by the arrows). The activation or deactivation of haptic mechanisms 506, 508 may be associated with the location of a tennis ball hitting the racket to simulate the quality of the stroke and/or location of the contact of the ball with the face of the racket (e.g., "sweet spot," edge, top, bottom, left, right, etc.).

Handle 504 may also include a shape changing haptic mechanism 510. Depending on the application, shape changing haptic mechanism 510 can macroscopically change its physical dimension to fit with a user's hand or to simulate a different type of racket. In other embodiments, device 500 can be configured to one of various types of gaming apparatus capable of emulating one of various types of ball games, such as a tennis match, a racquetball match, a table tennis match, a hockey game, a lacrosse game, and other types of ball games.

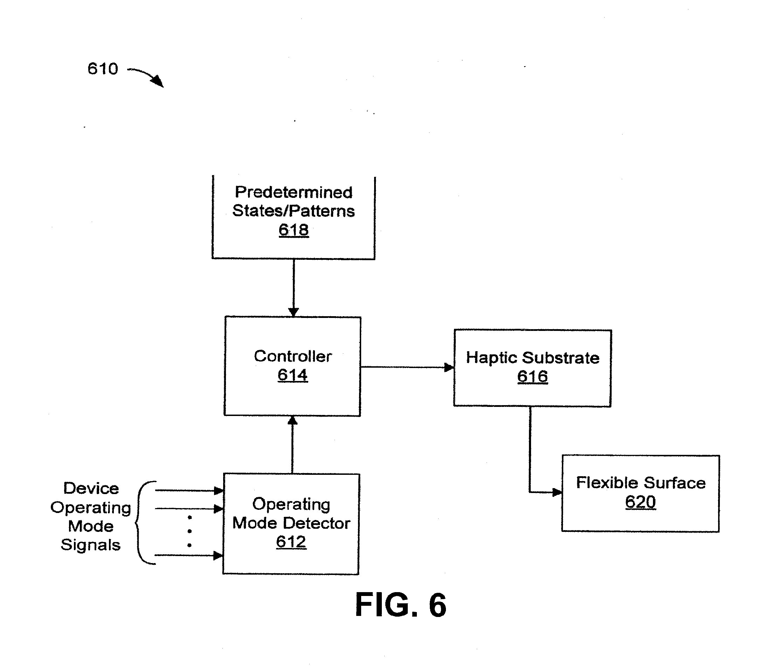

FIG. 6 is a logic block diagram illustrating an example of control structure 610 for a shape changing device in accordance with embodiments of the present invention. In one example, an operating mode detector 612 receives various operating mode signals or other indicators from various modules in, or associated with, the device. A processor or controller 614 can receive indications of a detected mode from a communication module or detector 612, as well as information from predetermined states and patterns 618.

Such predetermined states can include any device operating mode, application, and/or condition, in which a kinesthetic, shape change, and/or haptic effect is to be enacted in response thereto. Such effects or shape changes have corresponding patterns associated therewith, and an associated pattern can be recalled from storage (e.g., using any suitable memory device or elements). Activated control signals can then be supplied to haptic substrate 616 such that the appropriate pattern can be formed and enacted in a housing or flexible surface 620, as discussed above.

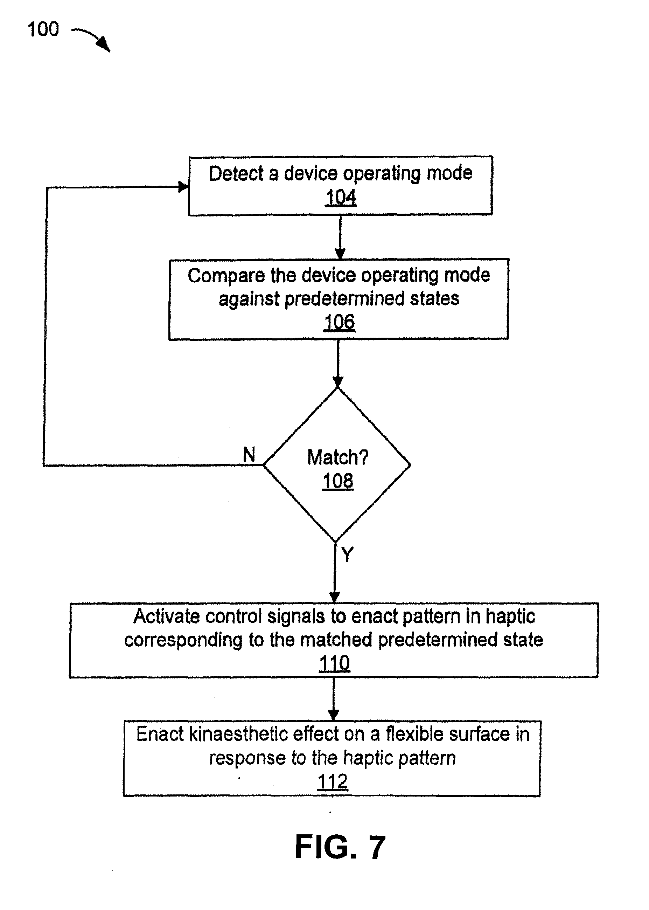

FIG. 7 is a flow diagram showing an example method 100 of controlling a deformable surface for a device in accordance with embodiments of the present invention. A device operating mode can be detected (104). A comparison can be made to determine if the device operating mode matches any predetermined states (106). When the detected operating mode or application matches a predetermined device state (108), appropriate activation control signals can be asserted in a haptic mechanism (110). In response, a flexible surface can be changed to enact a predetermined kinesthetic effect (112).

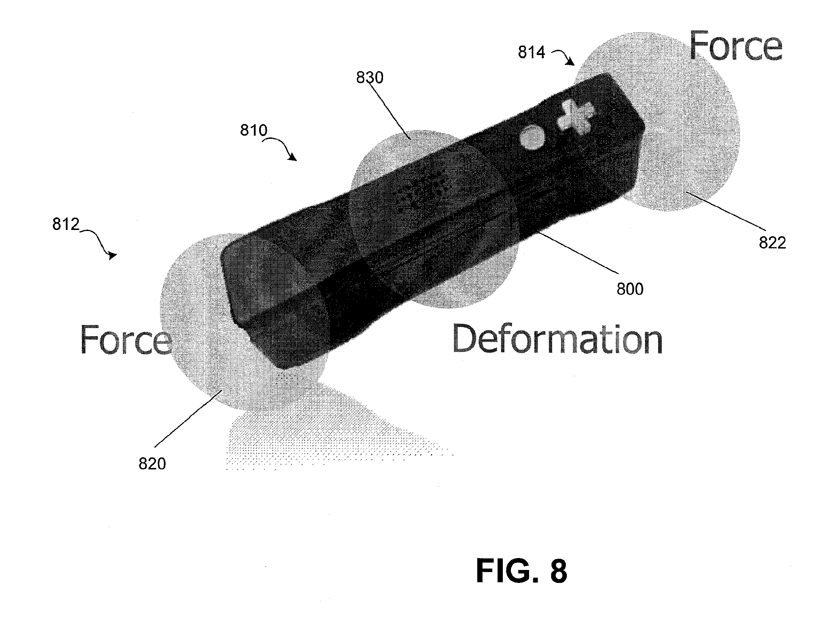

FIG. 8 illustrates a handheld device 800 capable of providing haptic effects in accordance with various embodiments of the present invention. In particular, handheld device 800 is capable of providing vibrotactile effects, kinesthetic effects, and/or force effects. As illustrated, handheld device 800 provides a deformation 830 or stretch effect in a middle portion 810 of handheld device 800 which may be used to provide various kinesthetic effects and/or deformation effects. Further, force effects or vibrotactile effects 820, 822 may be provided at a rear portion 812 of handheld device 800 and/or at a front portion 814 of handheld device 800. Other effects and arrangements may be used. In some embodiments of the invention, handheld device 800 is a gaming controller. Handheld device 800 in one embodiment further includes a sensing mechanism (not shown) that in one embodiment provides six degrees of freedom sensing.

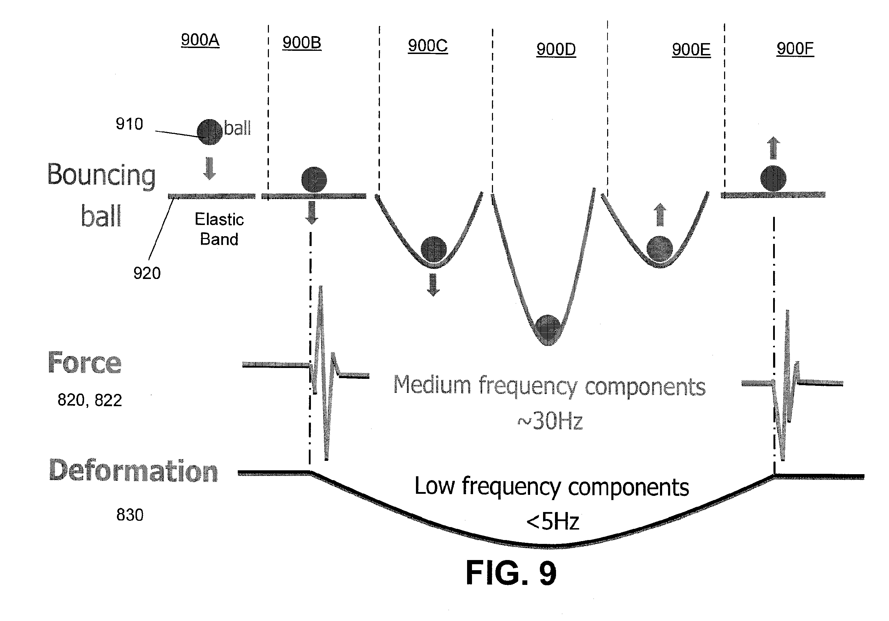

FIG. 9 illustrates various haptic effects that may be provided in, for example, a gaming environment, via handheld device 800 of Fig. 8 in accordance with various embodiments of the present invention. As illustrated, handheld device 800 uses various haptic effects to simulate a gaming object 910 (e.g., a ball) impacting a gaming surface 920 (e.g., a string or an elastic band) during various impact regions 900. As illustrated, impact regions 900 include a pre-impact region 900A, an impact region 900B, an initial deformation or stretch region 900C, a maximum deformation region 900D, a final deformation region 900E, and a release region 900F.

For example, as illustrated in FIG. 9, a ball falls during pre-impact region 900A and lands on an elastic band during impact region 900B. During deformation regions 900C-E, the elastic band stretches to a maximum at which point the ball changes direction and is bounced back up. The ball is released from the elastic band during release region 900F and then moves upwardly away from the elastic band. Other impact regions may be included. Further, other deformation profiles may be used to simulate different gaming surfaces 920 (e.g., rackets, bats, golf clubs, etc.).

In the example of FIG. 9, the user experiences the initial contact of the ball with the elastic band via a force effect, the catch and stretch via a deformation effect, and the release with another force effect. A sensing device in the handle of device 800 can be synchronized with the force and deformation haptic effects so that they are generated when the user is swinging the device, or crossing a plane, for example. In pre-impact region 900A, no force effects or deformation effects are used. In impact region 900B, one or more force effects 820, 822 are used to simulate the impact of gaming object 910 with gaming surface 920. In initial deformation region 900C, an initial deformation effect 830 may be used to simulate an initial stretch or pulse associated with the impact of gaming object 910 by gaming surface 920. In maximum deformation region 900D, a maximum deformation effect may be used to simulate a maximum stretch or pulse associated with the impact of gaming object 910 by gaming surface 920. In final deformation region 900E, a final deformation effect may be used to simulate a final stretch or pulse associated with the impact of gaming object 910 by gaming surface 920. In release region 900F, one or more force effects 820, 822 may be used to simulate a release of gaming object 910 from gaming surface 920. In a post-impact region, no force effects or deformation effects are used. Various combinations of force effects and/or deformation effects, as well as vibrotactile effects or other haptic effects, may be used.

As illustrated in FIG. 9, deformation effects correspond to haptic effects having predominately low frequency components in the range of less than 5Hz. In contrast, force effects correspond to haptic effects having predominately medium frequency components in the range of approximately 30Hz while frequencies in the range of 15Hz to 80Hz may be used.

A combination force and deformation effects may be used in various forms of gaming. For example, when swinging a device that simulates a tennis racket or baseball bat, force is felt on the grip, and a slight deformation can be felt as part of the return force. For a boxing game, force and deformation can be felt when colliding with an opponent. For catching a ball, deformation can be used to simulate the feeling of catching or releasing a ball in the user's hands.

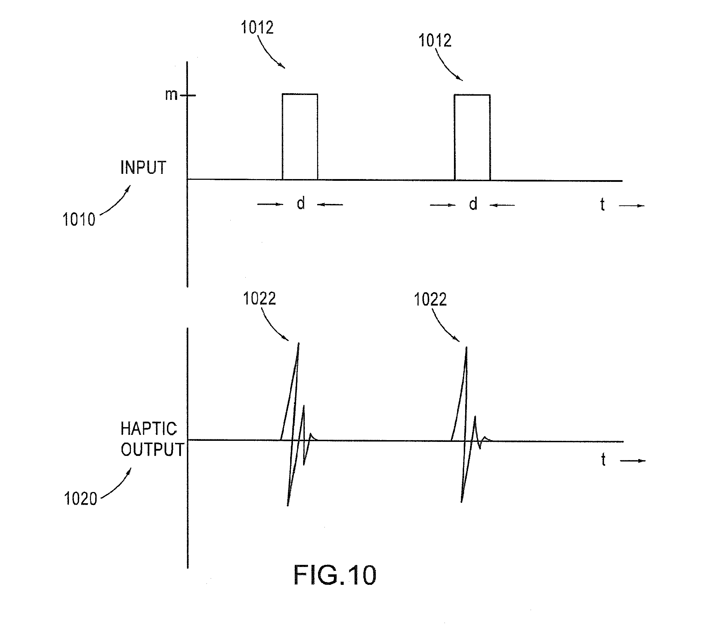

FIG. 10 illustrates an example input signal 1010 and a haptic output 1020 that may be used to simulate a force effect 820, 822 in accordance with various embodiments of the present invention. Input signal 1010 is provided to drive a haptic actuator which in turn responds by providing haptic output 1020. More particularly, input signal 1010 may include a pulse 1012 having a magnitude, M (which depends on a variety of factors as would be apparent), and a duration or pulse width, d (e.g., 70 ms). Input signal 1010 may include a square wave pulse, a sawtooth pulse, a semi-sinusoidal pulse, or other type of pulse. Pulse 1012 drives the haptic actuator which responds to pulse 1012 to produce haptic output pulse 1022. Haptic output pulse 1022 resembles a transient impulse response and includes medium frequency components (e.g., 30Hz). The actual medium frequency components produced are dependant on characteristics of the haptic actuator and pulse 1012 as would be appreciated. Haptic output pulse 1022 may be used to simulate a force effect during which a user of handheld device 800 experiences a sharp haptic effect of substantially limited duration (e.g., on the order of 70 ms). Such force effects are characterized as a contact force. Haptic output pulse 1022 may typically provide up to 8g's of force or more for various gaming impacts.

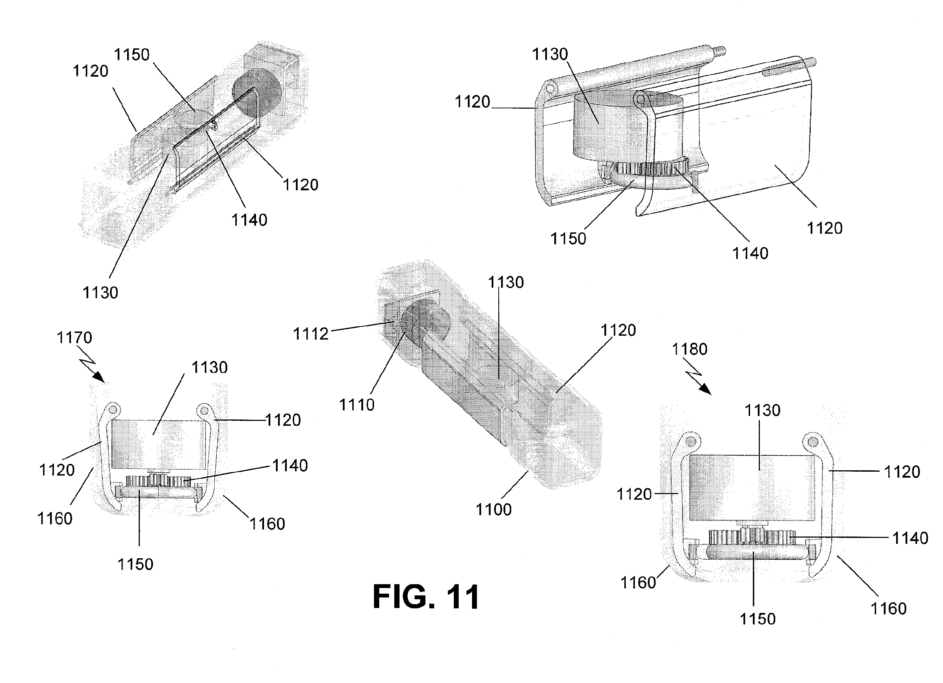

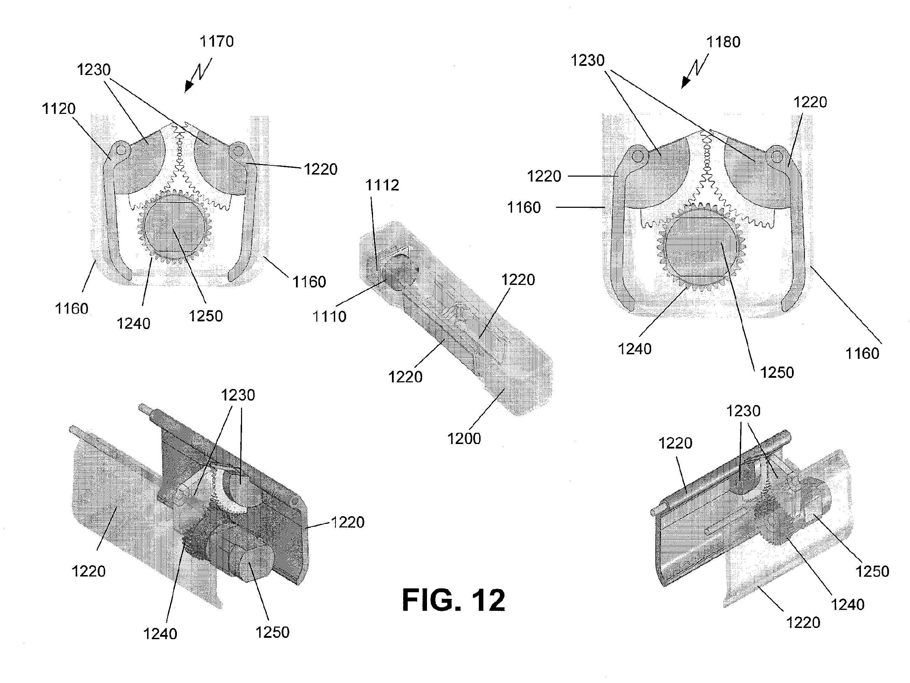

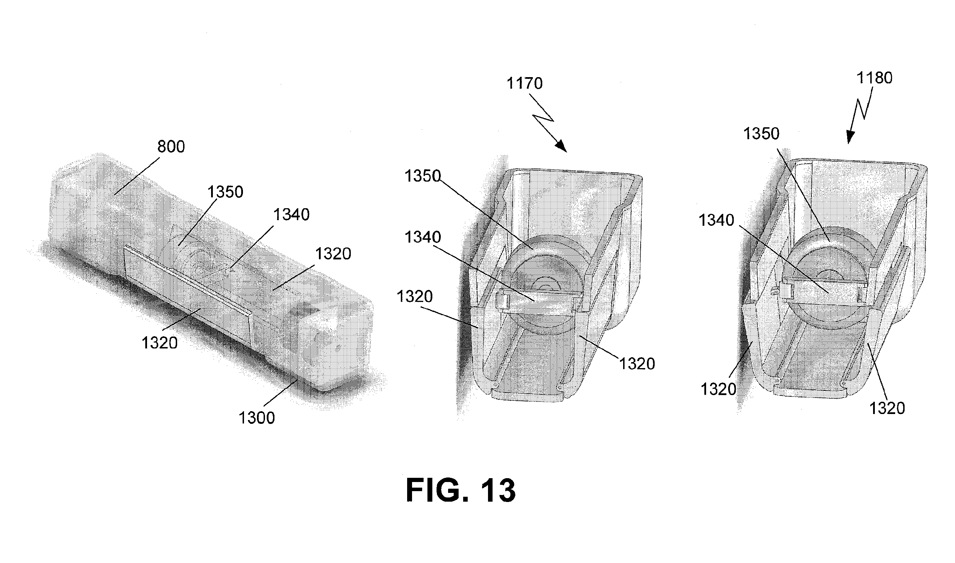

FIG. 11 illustrates various internal views of a handheld device 1100 similar to device 800 of FIG. 8 and capable of providing various haptic effects in accordance with an embodiment of the present invention. FIG. 12 illustrates various internal views of a handheld device 1200 similar to device 800 of FIG. 8 and capable of providing various haptic effects in accordance with an embodiment of the present invention. FIG. 13 illustrates various internal views of a handheld device 1300 similar to device 800 of FIG. 8 and capable of providing various haptic effects in accordance with an embodiment of the present invention. In each of these illustrative embodiments, the handheld device includes one or more haptic actuators, including a force effect actuator and a deformation effect actuator. In each of these embodiments, the force effect actuator includes a motor 1110 that drives an eccentric rotating mass ("ERM") 1112. In other embodiments, other types of actuators such as piezo or SMA based actuators can be used instead of the motor/ERM. The actual force effects that are produced by the force effect actuator depend on, for example, a mass of ERM 1112, a distance between its center of mass and axis of rotation, a size and rotational speed of motor 1110, and other characteristics of motor 1110 and ERM 1112. In some embodiments, one or more of the characteristics may be adjustable or controllable such that the force effect actuator may be tuned or controllably modified during operation.

FIG. 11 is now used to describe a deformation effect actuator in accordance with one embodiment of the invention. Device 1100 includes a DC motor mounted to a single-stage gearbox that drives a cam. The deformation effect actuator includes one or more deforming mechanisms 1120, a motor 1130, a gear 1140 and a cam 1150. Motor 1130 drives gear 1140 and cam 1150. Cam 1150 engages with deforming mechanism 1120 and forces them to expand. In some embodiments, a spring or similar bias device may be used to contract deforming mechanisms 1120. In some embodiments of the invention, deforming mechanisms 1120 provide the haptic effect directly to the user. In some embodiments of the invention, deforming mechanisms 1120 engages a deformable portion 1160 of a housing of handheld device 800 (e.g., a rubber housing) which provides the haptic effect to the user. As illustrated, handheld device 1100 includes a disengaged state 1170 where no deformation effect is provided to the user and an engaged state 1180 where a deformation effect is provided to the user. In some embodiments, various degrees of deformation effect may be provided depending on a shape and size of cam 1150 as would be appreciated. In some embodiments, the deformation effect may be provided to either or both sides of handheld device 1100.

FIG. 12 is now used to describe a deformation effect actuator in accordance with one embodiment of the invention. Device 1200 includes a multistage gearbox/motor assembly. The deformation effect actuator includes one or more deforming mechanisms 1220, a motor 1250, a drive gear 1240 and deforming gears 1230. Motor 1250 drives drive gear 1240. Drive gear 1240 engages with each of deforming gears 1230. Deforming gears 1230 are coupled to deforming mechanisms 1220 and are configured to expand and/or contract deforming mechanisms 1220. In some embodiments of the invention, deforming mechanisms 1220 provide the haptic effect directly to the user. In some embodiments of the invention, deforming mechanisms 1220 engage a deformable portion 1160 of a housing of handheld device 800 which provides the haptic effect to the user. As illustrated, handheld device 1200 includes a disengaged state 1170 where no deformation effect is provided to the user and an engaged state 1180 where a deformation effect is provided to the user. In some embodiments, various degrees of deformation effect may be provided to the user as would be appreciated. In some embodiments, the deformation effect may be provided to either or both sides of handheld device 1200.

FIG. 13 is now used to describe a deformation effect actuator in accordance with one embodiment of the invention. Device 1300 includes solenoid based actuation. The deformation effect actuator includes one or more deforming mechanisms 1320, a piston or linear drive or solenoid 1350, and a slide 1340. Linear drive 1350 drives slide 1340 back and forth between a disengaged state 1170 and an engaged state 1180. In the engaged state, linear drive 1350 drives slide 1340 forward which causes slide 1340 to engage with deforming mechanisms 1320 and expand them. In some embodiments of the invention, interior surfaces of deforming mechanisms 1320 may taper inwardly from a maximum distance near linear drive 1350 to a minimum distance at an extent of linear drive 1350 thereby providing increasing expansion of deforming mechanisms 1320 as slide 1340 is driven forward. In some embodiments of the invention, deforming mechanisms 1220 provide the haptic effect directly to the user. In some embodiments of the invention, deforming mechanisms 1220 engage a deformable portion 1160 of a housing of handheld device 1300 which provides the haptic effect to the user. In some embodiments, the deformation effect may be provided to either or both sides of handheld device 1300.

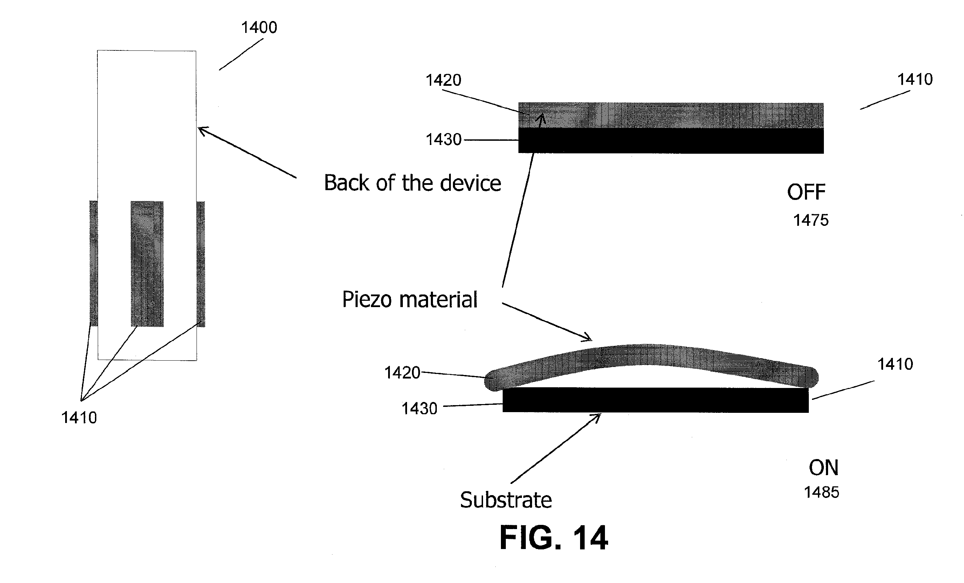

FIG. 14 is a block diagram of a deformation effect device in accordance with one embodiment of the invention. Device 1400, which may be a game controller device, has affixed to its outside surface one or more piezoelectric material based actuators 1410. Each actuator 1410 includes a substrate 1430 and piezoelectric material 1420. In an "off" state at 1475, the piezoelectric material 1420 is approximately flush against the substrate. In an "on" state at 1485, when current or an actuation signal is applied to the actuator, piezoelectric material 1420 will bow outwards. The bowing can be felt by a user's fingers that are contacting the piezoelectric material. In another embodiment, a rubber or other type of housing can cover actuators 1410. In one embodiment, the piezoelectric material may be Macro Fiber Composite ("MFC") material from Smart Material Corp., or may be any monolithic or composite piezo. Device 1400 may also include an internal force effect actuator as previously described.

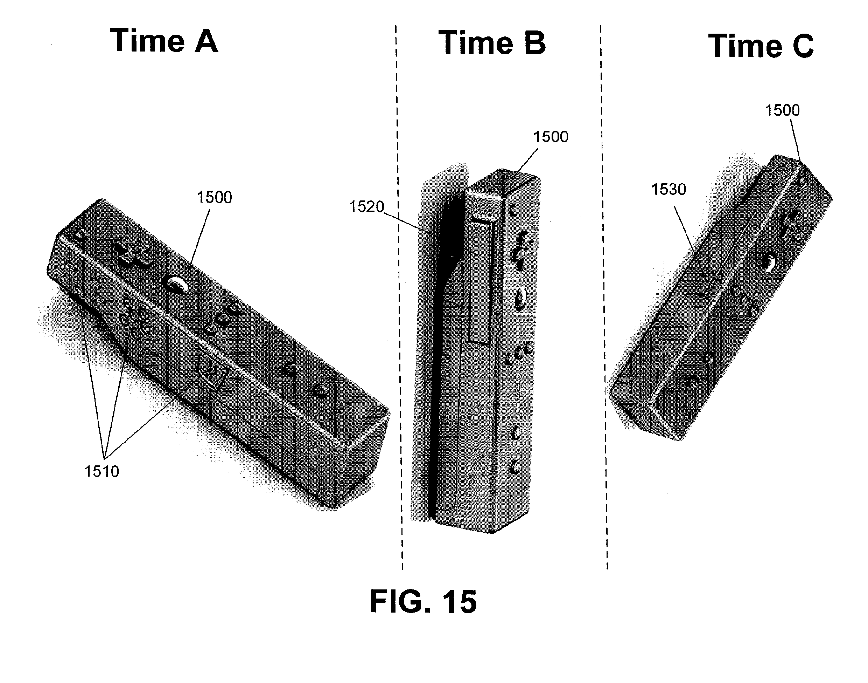

FIG. 15 is a perspective view of a game controller 1500 in accordance with one embodiment of the invention. Game controller 1500, similar the devices shown in FIG. 4, changes shape on its side in response to specific events in a video game. As shown in FIG. 15, at Time A, various shapes 1510 are formed on the side of controller 1500 to indicate, for example, a series of buttons and nibs. At Time B, the shape changes to form a rectangular input device 1520. At Time C, the shape changes again to form a specific weapon (i.e., a sword).

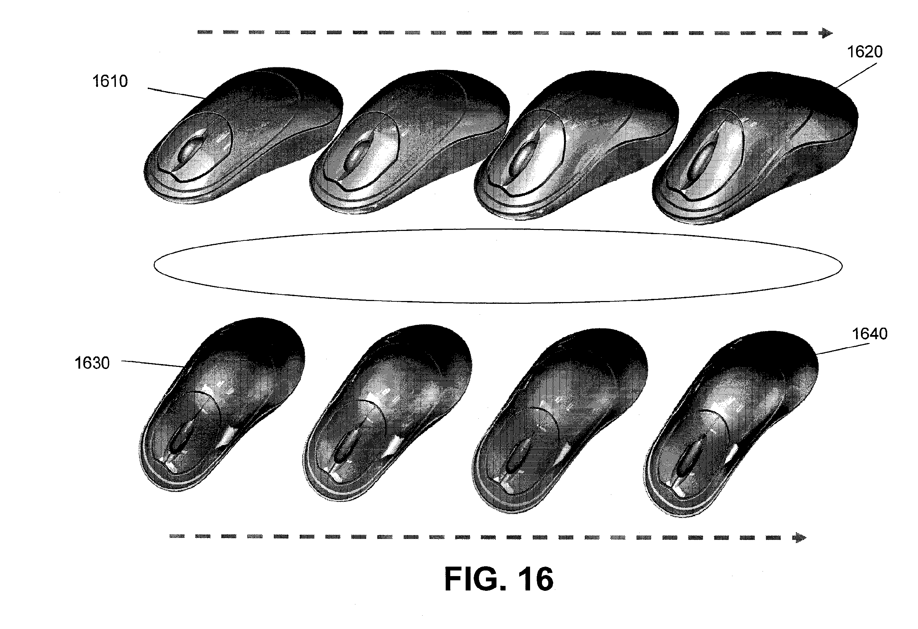

FIG. 16 is a perspective view of a computer mouse in accordance with one embodiment of the present invention. The shape of the mouse changes over time to provide ergonomic variations to the user. As shown, in the time duration between the mouse at 1610 and 1620, the base of the mouse has expanded to raise its height relative to the surface. Further, in the time duration between the mouse at 1630 and 1640, the shape of the sides of the mouse have changed to vary the grasping surface of the mouse.

Several embodiments are specifically illustrated and/or described herein. However, it will be appreciated that modifications and variations of the disclosed embodiments are covered by the above teachings and within the purview of the appended claims without departing from the spirit and intended scope of the invention.

The invention is further directed to a haptic device, a method, and a handheld device according to the following points:
1. A haptic device comprising:
   a processor;
   a communication module coupled to the processor for receiving a shape input; and
   a housing for housing the communication module and comprising a deformable portion;
   wherein the deformable portion comprises a deformation actuator, and the processor provides a signal to the deformation actuator in response to the shape input to deform the housing.
2. The device of point 1, wherein the shape input is received wirelessly.
3. The device of point 1, wherein the deformation actuator comprises an electroactive polymer.
4. The device of point 1, wherein the deformation actuator comprises a motor coupled to a deforming mechanism.
5. The device of point 1, wherein the deformation actuator comprises a piezoelectric material.
6. The device of point 1, further comprising a force actuator coupled to the processor.
7. The device of point 1, wherein the signal causes the deformation actuator to change a shape of the housing.
8. The device of point 1, wherein the deformation actuator generates haptic effects having frequency components causing a perception of deformation.
9. The device of point 6, wherein the force actuator generates haptic effects having frequency components causing a perception of directional or vibrational forces.
10. The device of point 7, wherein the change of shape simulates a handshake.
11. The device of point 7, wherein the change of shape changes an ergonomics of the device.
12. The device of point 7, wherein the change of shape causes the device to physically resemble a tool in a video game.
13. The device of point 7, wherein the change of shape causes the device to provide a specific shape on the housing, wherein the shape comprises at least one of a weapon, an input button, or a series of buttons.
14. The device of point 1, further comprising a display, wherein the deformation actuator further deforms the display in response to the shape input.
15. The device of point 1, further comprising a keyboard, wherein the deformation actuator further deforms the keyboard in response to the shape input.
16. The device of point 1, wherein the deformed housing forms a scrollbar in the housing for scrolling a list of options shown on a display of the haptic device.
17. A method of operating a wireless handheld device having a housing, the method comprising:
   receiving wirelessly a shape changing input;
   generating a signal to a deformation actuator in response to the shape changing input; and
   changing the shape of the housing via the deformation actuator in conformance with the shape changing input.
18. The method of point 17, wherein the deformation actuator comprises an electroactive polymer.
19. The method of point 17, wherein the deformation actuator comprises a motor coupled to a deforming mechanism.
20. The method of point 17, wherein the deformation actuator comprises a piezoelectric material.
21. The method of point 17, further comprising:
   receiving wirelessly a force generating input;
   generating a second signal to a force actuator in response to the force generating input.
22. The method of point 17, wherein the signal causes the deformation actuator to change a shape of the housing.
23. The method of point 17, wherein the deformation actuator generates haptic effects having frequency components causing a perception of deformation.
24. The method of point 21, wherein the force actuator generates haptic effects having frequency components causing a perception of directional or vibrational forces.
25. A handheld device having a first shape and in communication with a second device, the handheld device comprising:
   a controller;
   a force actuator coupled to the controller;
   a deformation actuator coupled to the controller;
   wherein the controller is adapted to receive a signal from the second device, and in response control the force actuator to cause a perception of force on the handheld device, or control the deformation actuator to change the first shape to a second shape.
26. The handheld device of point 25, wherein the handheld device is a video game controller and the signal is generated by a video game.
27. The handheld device of point 25, wherein the handheld device and the second device are portable communication devices.
28. The handheld device of point 25, wherein the change of the first shape to the second shape simulates a handshake or a heartbeat.
29. The handheld device of point 25, wherein the change of the first shape to the second shape changes an ergonomics of the handheld device.
30. The handheld device of point 25, wherein the change of the first shape to the second shape causes the device to physically resemble a tool in a video game.
31. The handheld device of point 25, wherein the second shape comprises at least one of a weapon, an input button, or a series of buttons.

## Claims

1. A handheld device (800) having a first shape and in communication with a second device, the handheld device comprising:
a controller (614);
a force actuator coupled to the controller (614);
a deformation actuator coupled to the controller (614);
wherein the controller is adapted to receive a signal from the second device, and in response control the deformation actuator to change the first shape to a second shape.

2. The handheld device (800) of claim 1, wherein the handheld device (800) comprises:
a middle portion (810) of the handheld device (800);
a rear portion (812) and a front portion (814) of the handheld device (800);
and the deformation actuator causes the handheld device (800) to produce a deformation effect (830) as the change from the first shape to the second shape in the middle portion (810) of the handheld device (800); and
wherein the force actuator causes the handheld device (800) to produce one or more force effects (820, 822) at the rear portion (812) and/or at the front portion (814) of the handheld device (800).

3. The handheld device (800) of claim 2, wherein the handheld device (800) uses the deformation effect (830) and the one or more force effects (820, 822) to simulate a gaming object (910) impacting a gaming surface (920) using a plurality of impact regions (900).

4. The handheld device (800) of claim 3, wherein the plurality of impact regions (900) comprise: a pre-impact region (900A), an impact region (900B), an initial deformation region (900C), a maximum deformation region (900D), a final deformation region (900E), and a release region (900F).

5. The handheld device (800) of claim 4,
wherein the gaming object (910) moves within the pre-impact region (900A) and makes contact with the gaming surface (920) within impact region (900B);
wherein the gaming surface (920) stretches to a maximum within the deformation region (900C), the maximum deformation region (900D), and the final deformation region (900E); and
wherein the gaming object (910) is released from the gaming surface (920) within release region (900F) and moves away from the gaming surface (920).

6. The handheld device (800) of claim 5,
wherein a user of the handheld device (800) experiences an initial contact of the gaming object (910) with the gaming surface (920) via a first force effect of the one or more force effects (820, 822);
wherein the user of the handheld device (800) experiences a catch of the gaming object (910) and a stretch of the gaming surface (920) via the deformation effect (830); and
wherein the user of the handheld device (800) experiences a release of the gaming object (910) via a second force effect of the one or more force effects (820, 822).

7. The handheld device (800) of claim 5 or 6,
wherein the one or more force effects (820, 822) are used to simulate an impact of the gaming object (910) and the gaming surface (920) in the impact region (900B);
wherein the deformation effect (830) comprises an initial deformation effect (830) used to simulate an initial stretch associated with the impact of the gaming object (910) and the gaming surface (920) in the initial deformation region (900C);
wherein a maximum deformation effect is used to simulate a maximum stretch associated with the impact of the gaming object (910) and the gaming surface (920) in the maximum deformation region (900D);
wherein a final deformation effect is used to simulate a final stretch associated with the impact of the gaming object (910) and the gaming surface (920) in the final deformation region (900E); and
wherein the one or more force effects (820, 822) are used to simulate a release of the gaming object (910) from the gaming surface (920) in the impact region (900B).

8. The handheld device (800) of claim 7,
wherein the initial deformation effect (830), the maximum deformation effect, and the final deformation effect each comprise one or more frequency components in a range of less than 5 hertz ("Hz"); and
wherein the one or more force effects (820, 822) comprise one or more frequency components in a range of 15Hz to 80Hz.

9. A method of operating a wireless handheld device (800) having a housing, the method comprising:
receiving wirelessly a shape changing input;
generating a signal to a deformation actuator in response to the shape changing input; and
changing the shape of the housing via the deformation actuator in conformance with the shape changing input.

10. The method of claim 9, wherein the handheld device (800) comprises a middle portion (810), a rear portion (812) and a front portion (814), the method further comprising:
sending the generated signal as a first signal to the deformation actuator;
causing the handheld device (800) to produce a deformation effect (830) in the middle portion (810) of the handheld device (800) as the change of the shape of the housing via the deformation actuator;
receiving a force generating input;
generating a second signal that is sent to a force actuator in response to the force generating input; and
causing the handheld device (800) to produce one or more force effects (820, 822) at the rear portion (812) and/or at the front portion (814) of the handheld device (800) via the force actuator.

11. The method of claim 10, wherein the second signal comprises a signal (1010) comprising a pulse (1012) having a magnitude and a duration.

12. The method of claim 11, wherein the pulse (1012) comprises one of:
a square wave pulse, a sawtooth pulse, or a semi-sinusoidal pulse.

13. The method of claim 11, wherein the force actuator produces a haptic output pulse (1022) in response to the pulse (1012).

14. The method of claim 13, wherein the haptic output pulse (1022) comprises one or more frequency components dependent on one or more characteristics of the force actuator and the pulse (1012), particularly the one or more frequency components of the haptic output pulse (1022) are in a range of 15Hz to 80Hz.

15. The method of claim 13, wherein the haptic output pulse (1022) is used to simulate a force effect during which a user of handheld device (800) experiences a specified haptic effect of a specified duration.
